# EUROPEAN PATENT SPECIFICATION

(11) **EP 0 339 588 B1**
(45) Date of publication and mention of the grant of the patent: **22.02.1995**
(21) Application number: 89107496.5
(22) Date of filing: 25.04.1989
(51) Int. Cl.: G06F 3/033

(54) **Coordinate input method employing touch panel**
Koordinaten-Eingabeverfahren unter Verwendung einer Berührungstafel
Méthode pour l'entrée de coordonnées utilisant un écran tactile

(30) Priority: 25.04.1988 JP 101904/88
(43) Date of publication of application: 02.11.1989
(73) Proprietor: SHARP KABUSHIKI KAISHA, Osaka 545 (JP)
(72) Inventor: Nishida, Hiroshi, Tenri-shi Nara-ken (JP); Yoshida, Hiroichi, Nara-shi Nara-ken (JP)
(74) Representative: TER MEER STEINMEISTER & PARTNER GbR

(56) References cited:
- US-A- 4 737 773
- IBM TECHNICAL DISCLOSURE BULLETIN, vol. 30, no. 4, September 1987, pages 1663-1666, New York, US; "Self-calibration and coordinate conversion for a touchpador touch screen computer input device"

## Description

### BACKGROUND OF THE INVENTION

The present invention relates to a coordinate input method employing a touch panel.

For example, in the case where a graphic form is displayed on a screen of a Japanese-language word processor, coordinates are inputted by using the touch panel. The touch panel has a rectangular shape and is usually used in a horizontally elongated orientation.

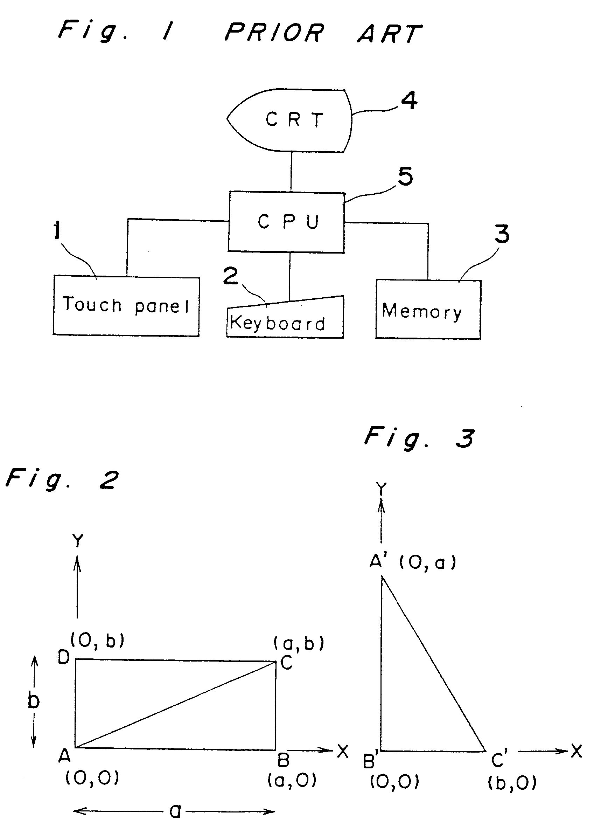

Fig. 1 shows a fundamental structure of a known Japanese-language word processor having the touch panel. The known Japanese-language word processor is constituted by a touch panel 1, a keyboard 2, a memory 3, a cathode-ray tube (CRT) 4 and a central processing unit (CPU) 5.

When a tip of a pen is brought into contact with a face of the touch panel 1, coordinate data corresponding to a position of the tip of the pen are generated. An operator uses the keyboard 2 so as to input various instructions to this word processor. The memory 3 stores the coordinate data generated in the touch panel 1. Meanwhile, the CRT 4 displays the data stored in the memory 3. The CPU 5 receives the coordinate data from the touch panel 1 and controls storage of the coordinate data in the memory 3 as well as display of the coordinate data by the CRT 4.

Fig. 2 shows a coordinate system of the touch panel 1 placed in the horizontally elongated orientation. In Fig. 2, a rectangle ABCD represents the face of the touch panel 1. Character a denotes a length of the side AB and character b denotes a length of the side AD. The length a of the side AB is larger than the length b of the side AD, namely a > b. The origin A has coordinates (0, 0), the point B has coordinates (a, 0), the point C has coordinates (a, b) and the point D has coordinates (0, b).

In Fig. 2, since the points A, B and C of the triangle ABC have the coordinates (0, 0), (a, 0) and (a, b), respectively, the triangle ABC falls within a region of an X-Y coordinate system of the touch panel 1. A triangle B′C′A′ is obtained by clockwise rotating the triangle ABC through 90° about the point B as shown in Fig. 3. Since a Y-coordinate of the point A′ is a larger than b, the Y-coordinate of the point A′ cannot be inputted to the touch panel 1 as it is.

An input method according to the preamble of the appended claim is known from the US patent 4,737,773. The coordinate input method described there comprises a calibration mode and an input mode. In the calibration mode, a shift between values as outputted from said touch panel and values as inputted into said memory is calibrated. This calibrated shift is then used in the input mode to correct inputted coordinates.

### SUMMARY OF THE INVENTION

It is the object of the present invention to provide a coordinate input method with which it is possible to input coordinates within an area which is larger than the area of the used touch panel.

The coordinate input method of the invention is defined by the teaching of the appended claim. By this method, it is possible to e. g. first input the coordinates of points within the area of the rectangular touch panel, and then to turn it by 90° to input then additional coordinates which are outside the area which was covered by the touch panel in its first position.

### BRIEF DESCRIPTION OF THE DRAWINGS

This object and features of the present invention will become apparent from the following description taken in conjunction with the preferred embodiment thereof with reference to the accompanying drawings, in which:
Fig. 1 is a block diagram showing a structure of a prior art Japanese-language word processor;
Fig. 2 is a view explanatory of a coordinate system of a touch panel employed in the prior art word processor of Fig. 1;
Fig. 3 is a view explanatory of coordinates of a graphic form to be inputted to the touch panel of Fig. 2;
Figs. 4 and 5 are views showing a coordinate input method according to one embodiment of the present invention;
Fig. 6 is a block diagram showing a system for carrying out the method of Figs. 4 and 5; and
Fig. 7 is a flow chart showing a processing sequence of the method of Figs. 4 and 5.

Before the description of the present invention proceeds, it is to be noted that like parts are designated by like reference numerals throughout several views of the accompanying drawings.

### DETAILED DESCRIPTION OF THE INVENTION

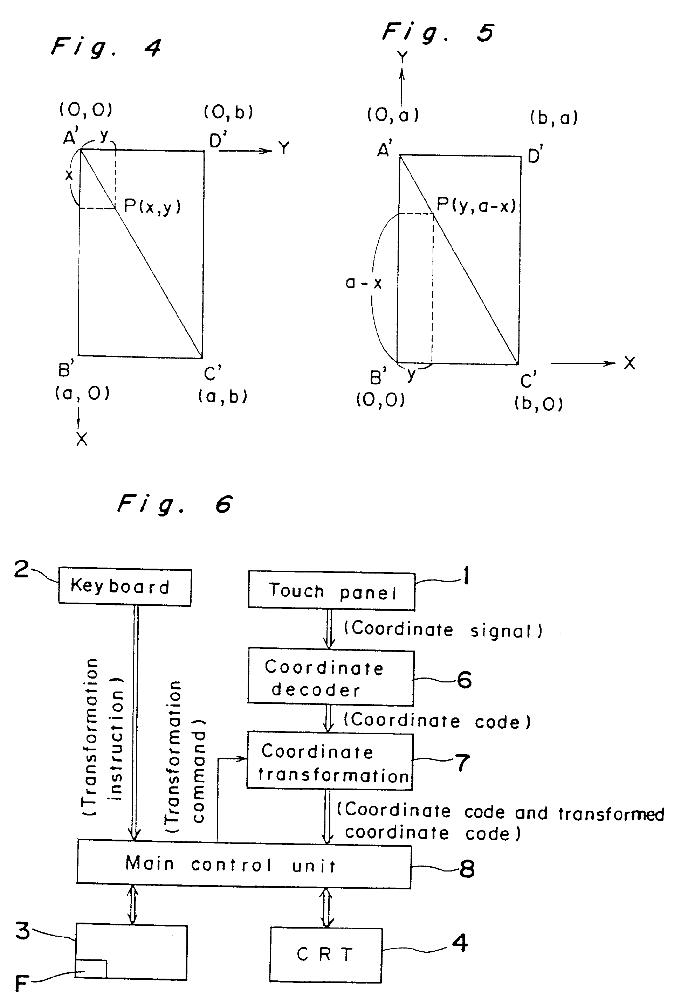

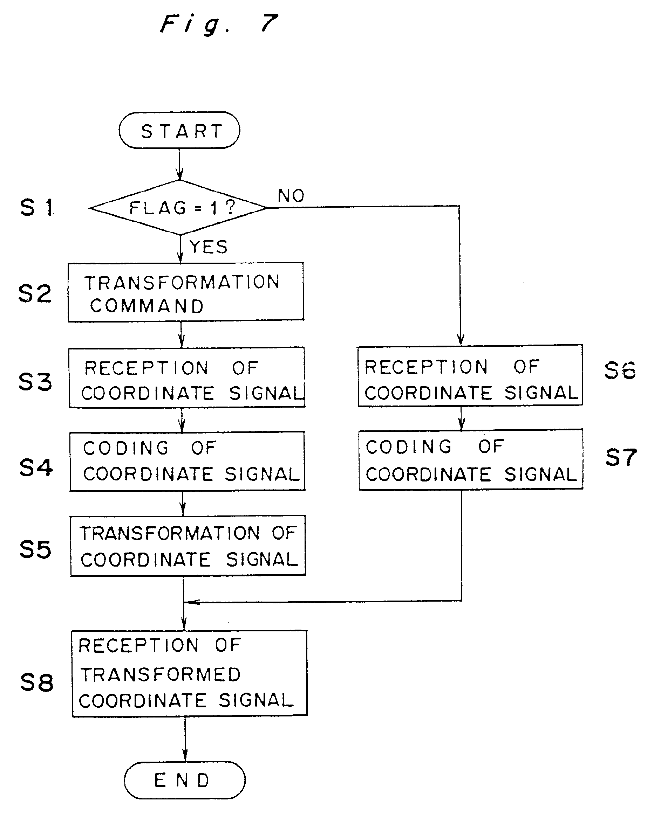

Referring now to the drawings, there is shown in Figs. 4 and 5, a coordinate input method according to one embodiment of the present invention. Fig. 4 shows a rectangle A′B′C′D′ of an X-Y coordinate system of a touch panel 1 (Fig. 6) placed in a vertically elongated orientation. The rectangle A′B′C′D′ is obtained by clockwise rotating the rectangle ABCD of Fig. 2 through 90° about the origin A. Therefore, in Fig. 4, the origin A′ is disposed at the left upper corner of the rectangle A′B′C′D′ and the coordinates (a, b) of the point C′ are disposed at the right lower corner of the rectangle A′B′C′D′ . Furthermore, the X-axis and the Y-axis of the coordinate system of Fig. 2 are converted into the Y-axis and X-axis of the coordinate system of Fig. 4, respectively.

Supposing here that a point P having coordinates (x, y) in the coordinate system of Fig. 2 has been inputted to the touch panel 1 of Fig. 4, the coordinates (x, y) are outputted by the touch panel 1. However, since the coordinate system of Fig. 4 is obtained by clockwise rotating the original coordinate system of Fig. 2 through 90° about the origin A, the coordinates (x, y) of the coordinate system of Fig. 4 do not represent correct values in the coordinate system of Fig. 2.

Therefore, coordinate transformation is performed as described below. Fig. 5 shows an X-Y coordinate system which has been subjected to coordinate transformation. In Fig. 5, the X-axis and the Y-axis of the coordinate system of Fig. 4 are, respectively, converted into the Y-axis and the X-axis of the coordinate system and a positive direction of the Y-axis is reversed from that of the X-axis of the coordinate system of Fig. 4 such that the origin of the coordinate system of Fig. 5 is set at the left lower point B′ . At this time, in response to input of the coordinates (x, y) of the point P to the touch panel 1, the point P has an X-coordinate of y and a Y-coordinate of (a-x).

By this coordinate transformation, even when the coordinate in the vertical direction is so large as to fall beyond a region of the coordinate system in the horizontally elongated orientation of the touch panel 1, the coordinate can be inputted to the touch panel 1 by using the touch panel 1 in the vertically elongated orientation.

Fig. 6 shows a structure of a system for carrying out coordinate transformation of the method of the present invention. The system includes the touch panel 1, a keyboard 2, a memory 3 and a CRT 4 as in the known arrangement of Fig. 1 referred to earlier. Furthermore, the system includes a coordinate decoder 6, a coordinate transformation portion 7 and a main control unit 8. The coordinate decoder 6 converts into a coordinate code, a signal of coordinates of a point inputted to the touch panel 1. The coordinate transformation portion 7 performs the above described coordinate transformation in response to a transformation command from the main control unit 8. The memory 3 stores a flag F which assumes "0" and "1" when the touch panel 1 is used in the horizontally elongated position and the vertically elongated position, respectively.

An operational sequence of the system of Fig. 6 is described with reference to a flow chart of Fig. 7, hereinbelow. If it is found at step S1 that the flag F is 1, the main control unit 8 gives the transformation command to the coordinate transformation portion 7 at step S2. The signal of the coordinates of the input point is received by the coordinate decoder 6 at step S3 and is converted into the coordinate code by the coordinate decoder 6 at step S4. This coordinate code is subjected to the above described coordinate transformation into coordinate data by the coordinate transformation portion 7 at step S5. The coordinate data subjected to coordinate transformation are stored in the memory 3 at step S8.

On the other hand, if it is found at step S1 that the flag F is 0, the transformation command is not given from the main control unit 8 to the coordinate transformation portion 7. Namely, at this time, the coordinate signal from the touch panel 1 is received by the coordinate decoder 6 at step S6 and is converted into the coordinate code by the coordinate decoder 6 at step S7. Then, the program flow proceeds to step S8.

As is clear from the foregoing description, in the method of the present invention, the coordinates of the input point in the vertically elongated orientation of the touch panel are subjected to coordinate transformation.

Therefore, in accordance with the present invention, the touch panel can be used not only in the horizontally elongated orientation but in the vertically elongated orientation, thereby resulting in extension of a range of application of the touch panel.

## Claims

1. A coordinate input method employing a memory (3) receiving the output signal of a rectangular touch panel (1) having a larger side of the length a and a shorter side of the length b for inputting coordinate values X and Y by touching said panel, whereby the direction of the X-axis of the panel is the direction of the longer side, and the direction of the Y-axis is the direction of the shorter side;
**characterized by** the following steps:
- determining whether the said rectangular touch panel is arranged horizontally (flag = 1) or vertically (flag = 0), and
- inputting values X, Y as outputted from said rectangular touch panel as they are into said memory when it is determined that said rectangular touch panel is arranged horizontally, or
- inputting values X, Y as outputted from said rectangular touch panel as X = Y and as Y = a-X, respectively, when it is determined that said rectangular touch panel is arranged vertically.

## Patentansprüche

1. Koordinateneingabeverfahren unter Verwendung eines Speichers (3), der das Ausgangssignal eines rechteckigen Berührungstabletts (1) mit einer längeren Seite der Länge a und einer kürzeren Seite der Länge b empfängt, um Koordinatenwerte X und Y durch Berühren des Tabletts einzugeben, wobei die Richtung der X-Achse des Tabletts die Richtung der längeren Seite und die Richtung der Y-Achse die Richtung der kürzeren Seite ist;
**gekennzeichnet durch** die folgenden Schritte:
- Ermitteln, ob das rechteckige Berührungstablett horizontal (Flag = 1) oder vertikal (Flag = 0) ausgerichtet ist; und
- Eingeben von Werten X, Y, wie vom rechteckigen Berührungstablett ausgegeben, in unveränderter Weise in den Speicher, wenn ermittelt ist, daß das rechteckige Berührungstablett horizontal ausgerichtet ist, oder
- Eingeben von Werten X, Y, wie vom rechteckigen Berührungstablett ausgegeben, als X = Y bzw. Y = a-X, wenn ermittelt ist, daß das rechteckige Berührungstablett vertikal ausgerichtet ist.

## Revendications

1. Procédé pour l'entrée de coordonnées utilisant une mémoire (3) recevant le signal de sortie d'un écran tactile rectangulaire (1), ayant un plus grand côté de longueur a et un plus petit côté de longueur b, pour introduire des valeurs de coordonnées X et Y en touchant ledit écran, la direction de l'axe des X de l'écran étant la direction du plus grand côté, et la direction de l'axe des Y étant la direction du plus petit côté;
caractérisé par les étapes suivantes consistant à:
- déterminer si ledit écran tactile rectangulaire est disposé horizontalement (indicateur = 1) ou verticalement (indicateur = 0), et
- introduire des valeurs X, Y telles que sont sorties dudit écran tactile rectangulaire, telles quelles dans ladite mémoire quand il a été déterminé que ledit écran tactile rectangulaire est disposé horizontalement, ou
- introduire des valeurs X, Y telles que sorties dudit écran tactile rectangulaire, telles que, respectivement, X = Y et Y = a - X, quand il a été déterminé que ledit écran tactile rectangulaire est disposé verticalement.
